# EUROPEAN PATENT APPLICATION

(11) **EP 2 674 888 A1**
(43) Date of publication of application: **18.12.2013**
(21) Application number: 12305668.1
(22) Date of filing: 13.06.2012
(51) Int. Cl.: G06F 21/30

(54) **System and method for validating a user of an account using a token**

(71) Applicant: Gemalto SA, 92190 Meudon (FR)
(72) Inventor: Falcou, Cyrille, 92197 Meudon Cedex (FR); Smadja, Philippe, 92197 Meudon Cedex (FR)

(57) **Abstract**

The present invention relates to a method for securing entering a PIN, where the Personal Identification Number known as PIN is used to authenticate the user, that are made on a terminal not trusted to be secure due to the possibility of malicious software that may exist on that terminal. During an entering step of the PIN code, a generated random number is displayed onto an electronic display of a token connected to the terminal. The PIN code is selected and validated from the random number thanks to a graphical user interface and/or user input means of the terminal. The validated PIN code is verified by the token. With the method proposed by the present invention, the PIN code is never known by the terminal. Indeed, only information regarding cursor or digital movement of the graphical user interface and/or the user input means is known on the side of the terminal, that information is in fact a random value, its link with the PIN code is only known by the token.

## Description

### FIELD OF THE INVENTION

This invention pertains to security systems that restrict access to an account or other asset. The invention also relates to improved means for reducing the risk of theft and for protecting related accounts, including measures to reduce identity theft and other forms of fraud.

In particular, but not exclusively, the invention relates to secure entering a PIN, where the Personal Identification Number known as PIN is used to authenticate the user, that are made on a terminal not trusted to be secure due to the possibility of malicious software that may exist on that terminal. The invention also pertains to a device using said method.

### BACKGROUND OF THE INVENTION

Passwords have been described as the weak link in modern computer security. In many cases, all that stands between would-be thieves and a bank account, email account, corporate records, or even control of many aspects of a business is a string of several characters. The growing problem of identify theft is exacerbated by inadequate password security. Guidelines for "strong passwords" have been promulgated to make it more difficult for others to guess passwords. Unfortunately, even complex, hard-to-guess passwords can be stolen or discovered in many ways, such as by spyware that monitors keystrokes on a computer, keystroke logging devices attached to a computer, by guessing or brute-force techniques to discover simple passwords, by careless actions of the password owner who may write a password down and leave it available for others to see, by an observer simply watching to see what password is typed, and so forth.

Security theft is a growing problem that requires increased security means on many fronts. Protection of passwords and other personal information is a vital concern, and previous attempts to improve security associated with a user's assets and identity have a variety of shortcomings, often failing to provide users with the flexibility they need to control access and establish rules for protecting their assets while allowing access under various circumstances.

One step toward improved security involves the use of hardware-based authentication for gaining access to an account, typically in the form of two-part authentication (hardware authentication plus a user-provided password) as opposed to single-factor authentication. Such approaches can include the use of a smart card which have an embedded chip that can hold a digital certificate allowing authentication to be accomplished through a public key infrastructure (PKI). In addition to entering the user's password or PIN, the user's smart card must be read by a smart-card reader. Reading of the chip can be achieved using a variety of devices that can communicate with a network or computer, including USB devices or a USB token with an embedded smart card.

Another hardware-related solution involves password synchronization, in which a hardware "token" meant to be in the possession of an authorized user generates an alphanumeric string that changes periodically (e.g., every 15 seconds, 30 seconds, or 60 seconds) according to a secret algorithm. Typically, the time is combined with user credentials to generate the seemingly random string. To gain access the user must enter the currently displayed string and, typically but not necessarily in all system, also enter a fixed or static password. A central server can then determine if the temporary string is correct and also verify that the correct password is entered. In this manner, even if the entered password is observed or intercepted, it will no longer be valid after a brief interval of time, resulting in a two-part authentication scheme that provides a one-time password (OTP).

Password synchronization (also known as time synchronous OTP) is not the only OTP method. Event synchronous and challenge-response schemes are among other approaches to consider. In each approach, an algorithm is applied to the credentials of the user (e.g., a unique key) to generate a string that can serve as an OTP (or be coupled with a PIN to form the OTP). In event synchronous schemes, an OTP is generated in response to an event such as inserting a USB device, pressing a button, entering a keystroke or clicking on a button on a graphical user interface. In challenge-response schemes, a challenge is entered or sent to the token, and an OTP is generated in response based on a combination of the challenge with the user credential according to an algorithm. Various hybrid approaches are also known based on combinations of these schemes.

Even with hardware-assisted two-part authentication schemes, there is the risk of theft and account hijacking. Indeed, the most critical is the malicious and spying software that are able to read every key stroke typed on the keyboard and see everything displayed on the screen and even take full control over the victim's computer. This is not a rare problem, statistics reveal that most computers today are infected with Trojan horses and/or spy software. Malicious hardware, like hardware key loggers can also be attached to personal computers.

The personal computer is made of hardware, kernel, operating system, services and applications; it is practically unfair to hold the user liable or even responsible for the security of all these layers especially because malicious software can in many cases be undetectable or at least difficult to detect for some period of time until it is discovered and a detection and/or removable tool becomes available.

It is known that the hardware solution with a PIN pad integrated could be very secure, but what prohibits it from spreading to most computer users is its high cost. A good example of such hardware solution is the smartcard reader with a PIN pad integrated in the smartcard reader itself. In such hardware, the PIN is never sent to the host computer, it is sent directly to the smartcard. This integrated PIN pad adds a very high value to security because without it, i.e. using a normal smartcard reader that does not have an integrated PIN pad, a malicious software can capture the PIN from the keyboard of the computer and every time it detects that the smartcard is inserted, it would maliciously use it to make fraudulent transactions, as many times as it wishes but when the smartcard reader has an integrated PIN pad on it, this can never happen.

Unfortunately, this problem has no low cost solution. The secure solutions are very expensive, like the use of smartcard with a reader that has an integrated PIN pad.

Of the various problems in the field, there is a particular need for a low cost customer owned security device that avoid displaying on the computer screen any information regarding the digit of the PIN code.

### SUMMARY OF THE INVENTION

The following presents a simplified summary in order to provide a basic understanding of some aspects of the disclosed embodiments. This summary is not an extensive overview and is intended to neither identify key or critical elements nor delineate the scope of such embodiments. Its purpose is to present some concepts in a simplified form as a prelude to the more detailed description that is presented later.

The present invention is directed toward improving the security of protected assets, particularly assets protected with a password system, including personal identification numbers.

In one aspect of the invention, users are provided with a token with a small screen integrated. With the method proposed by the invention using said token the digits that constituted a PIN code are never displayed on the terminal screen then not sensible to a screen shot. For that, once the user has to enter its PIN code, a random number is displayed on the screen of the token. This random number has the size of the PIN code or more.

To enter its PIN code, the user thanks to the graphical user interface and/or user input means (mouse or keyboard) of the terminal can select or modify the token digits of the random number generated to obtain the PIN code. Once the PIN code is totally entered and displayed on the screen of the token, the user validates this PIN with the graphical user interface and/or user input means (mouse or keyboard) of the terminal.

With the method proposed by the present invention, the PIN code is never known by the terminal. Indeed, only information regarding cursor or digital movement of the graphical user interface and/or the user input means is known on the side of the terminal, that information is in fact a random value, its link with the PIN code is only known by the token.

In an embodiment, this information can be hidden to software of the terminal for an eventual replay during a session

Thanks to the random number generated by the token the information to select and to validate the PIN code is never the same.

This method adds a very high value to security without an integrated PIN pad.

The present invention is defined, in its broadest sense, as a method to secure entering a PIN code that are made on a terminal not trusted to be secure comprising the following steps:
- generating a random number which is displayed onto an electronic display of a token connected to the terminal,
- entering the PIN code by manipulating the digits of the random number thanks to a graphical user interface and/or user input means of the terminal to select and to validate a PIN code from a random number,
- verifying if the entered PIN code is the expected one stored.

According to an embodiment, the random number generated having the size of the PIN code is modified by entering information through the graphical user interface and/or user input means of the terminal. During said modification step for each signal from the terminal, the token interprets it and increases or decreases the random number according to pre-defined rules associated to said signal.

According to an another embodiment, the random number generated having the size greater than the size of a PIN code is selected digit by digit by entering information through the graphical user interface and/or user input means of the terminal. During this selection step for each signal from the terminal the token interprets it and highlights successively digit by digit the random number according to pre-defined rules associated to said signal.

According to the present invention, a software downloaded into the terminal and a firmware of the token allow to correlate the manipulation onto the graphical user interface and/or input means to the modification to be made onto the digits displayed on the electronic display of the token.

The present invention also relates to a security system comprising a non trusted terminal connected to a token comprising an electronic display **characterized in that** it comprises comprising means to execute the present invention.

To the accomplishment of the foregoing and related ends, one or more embodiments comprise the features hereinafter fully described and particularly pointed out in the claims.

### BRIEF DESCRIPTION OF THE DRAWINGS

The following detailed description will be better understood with the drawings, in which:
Figures 1 and 3 represent a system used in the method according to an embodiment of the present invention;
Figure 2 illustrates the different steps of the method according to an embodiment of the present invention.

### DETAILED DESCRIPTION OF THE EMBODIMENTS OF THE INVENTION

The same elements have been designated with the same reference numerals in the different drawings. For clarity, only those elements and steps which are useful to the understanding of the present invention have been shown in the drawings and will be described.

In particular, the resources used by a terminal have not been detailed, the present invention being compatible with any current use of a hardware or software resource. Further, the mechanisms of data communication between the terminal and its environment have not been detailed either, the present invention being here again compatible with usual mechanisms.

Moreover, when an action is said to be performed by a terminal, it is in fact executed by a microprocessor in this terminal controlled by instruction codes recorded in a program memory on the said terminal. An action is also ascribed to an application or software. This means that part of the instruction codes making up the application or software are executed by the microprocessor.

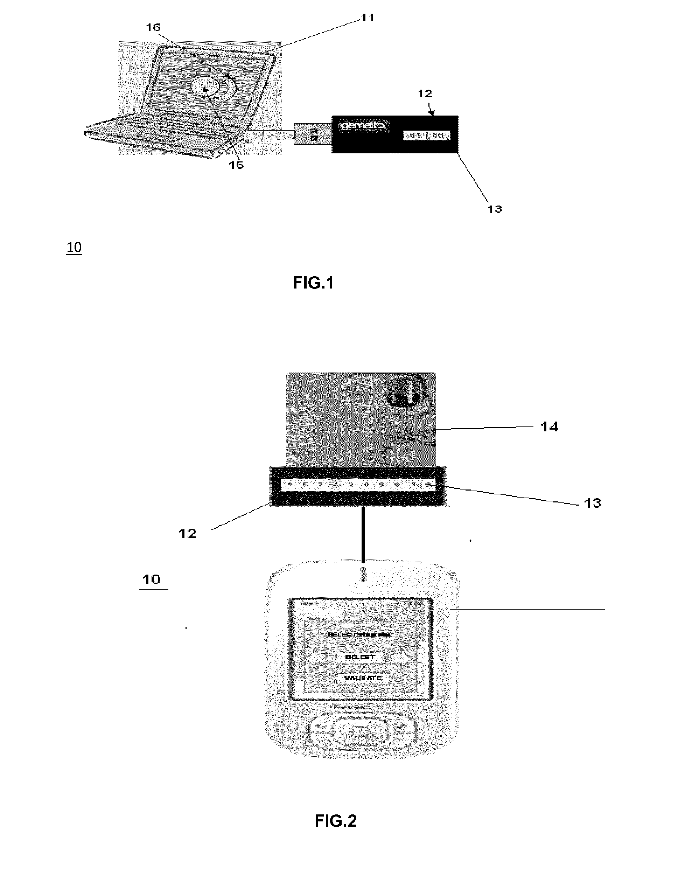

FIG. 1 depicts an embodiment of a security system 10 for protecting an asset. An asset can be understood to potentially be any asset that individuals, organizations, or other entities may wish to protect with a security system.

The security system 10 comprises a terminal 11. Said terminal 11 can for instance be a personal computer, a mobile phone, a PDA, a tablet computer, a Laptop or a notebook. Said terminal 11 can be any device comprising a graphical user interface and/or user input means that the user can manipulate to move forward or to change the digits of the PIN code displayed on an electronic display 13 of a token 12.

The input means can be a keyboard or a mouse though it is understood that other variations can be used instead such as a voice-recognition input system. In the embodiment illustrated at FIG. 1, the terminal 11 is a Laptop.

A software downloaded into the terminal 11 allows the user to match the manipulation onto the graphical user interface and/or input means to the selection and the validation actions onto the digits displayed on an electronic display 13 of a token 12.

Said software can be provided to the terminal by a service provider. To download this software, the service provider can send to the terminal 11 a SMS including a downloading link of the software from a database of said provider. In another embodiment, the software can be downloaded directly through a link accessible from the website provider. By clicking on the download link, the user can install the software onto the terminal 11.

In another embodiment, the software is integrated in the operating system which controls the execution of the instruction codes of the program memory. In another embodiment, the software of the invention is downloaded to the terminal 11 at the time of manufacture.

The access of the asset is controlled by the token 12 comprising the electronic display 13, said token being connected to the terminal 11. The token 12 can be a key fob, a card, a card reader, a USB-connected device, a contactless device, and the like. The match of the manipulations between the graphical user interface and/or input means of the terminal and the selection and the validation action on the digits displayed onto the token 12 is made thank to a firmware of the token. This firmware can be integrated in the operating system, which controls the execution of the instruction codes of the program memory of the token 12, during an update step. The firmware can also be downloaded into the token 12 during a manufacturing step.

Alternatively, a multifunctional tool can be provided with software to also provide the control access of the asset into the token 12. In this case, the token 12 is actually provided through proprietary software installed on an electronic device such as a computer, a Pocket PC, personal digital assistants (PDAs) mobile phone, and others; said electronic device being different from the terminal 11.

In the embodiment illustrated in FIG. 1, the token 12 is a USB device comprising a LCD screen.

An asset can be private resources or application of the terminal 11, of the token 12 or of a remote server.

FIG. 2 depicts another embodiment of a security system 10 for protecting an asset. In said embodiment, the token 12 comprises a reader of a device 14 embedding a smart card. The token 12 comprises the electronic display 13. In this embodiment, the terminal 11 is a mobile phone

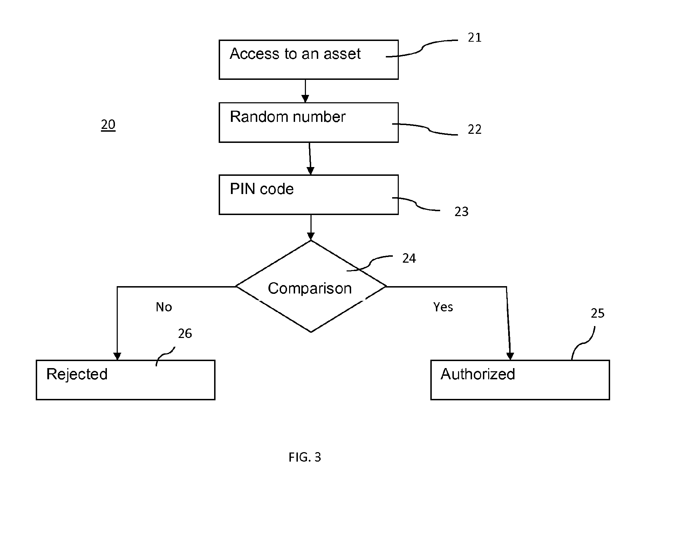

FIG. 3 shows a flow chart 20 of an embodiment of an access process of an asset according to an implemented invention.

At a first step 21, upon receiving a request from a user or a transaction process to access to an asset controlled by the token 12, said token launch the execution of the firmware. Then at step 22, the token 12 generates a random number which is displayed onto the electronic display 13 of the token 12. This random number has the size of a PIN code.

At step 23, the terminal 11 displays a message for entering the Pin code. For instance, the graphical user interface displays the following message "Please enter your PIN code". The user provides the requested PIN code by entering information through the graphical user interface and/or input means of the terminal so that to modify the random number until the PIN code is displayed onto the electronic display 13 of the token 12.

Various embodiments can be used to modify this random number. In a first embodiment, to enter its PIN code, a digital rowel is displayed on the graphical user interface. The user thanks, for example, to the mouse or some specific keys of the keyboard moves the digital rowel. This digital rowel can, in a variant, be moved manually. First of all, the firmware starts the modification step with a first digit or a first couple of digit of the random number. The digital rowel movement is sent to the token 12, the firmware increases or decreases then said corresponding digit or couple of digit of the random number according to the direction of the movement of the digital rowel. For example, it can be pre-established that the movements in the right direction increase the random number and the left direction decrease said random number. Once the digit or the couple of digit reach the number wishes by the user, the firmware carry on the modification step on the further digit or couple of digit of the random number.

Once the PIN code wished by the user is totally entered and displayed on the token 12, the user can validate this PIN, for example, by clicking on a validating area displayed on the terminal 11.

In another embodiment to enter its PIN code, the input means can be the keyboard of the terminal 11, a virtual keyboard or a voice command. In this case, it is pre-established for some specific keys of the keyboard to increase or decrease the random number. For example, it can be pre-established that arithmetic operator key such as "+" increase by "1" the digit or the couple of digit and the arithmetic operator key such as "-" decrease the digit or the couple of digit by "1". Others keys of the keyboard can be used such as the cursor arrow key.

In general, in the pre-establishment step allowing correlating signal from input means from the terminal 11 and the modifications to be made on the random number, some pre-defined rules have to be defined:
- how the random number has to be increased or decreased (digit by digit, couple digit by couple digit or the whole digits),
- with which digit of the random number the firmware starts the modification step,
- which input means of the terminal 11 increase or decrease the digits of the random number,
- the rate of increase or decrease according to an action made on said input means....

During the modification step, for each signal from the terminal 11, the token 12 interprets it and increases or decreases the random number according to the pre-defined rules associated to said signal.

Next, during step 24 of the test, the token 12 analyses whether the displayed random number validated is the expected data. If the answer is yes, i.e. when the validated random number corresponds with the expected data stored within the token 12, into a device 14 or into a remote device, then the token 12 authorizes, at step 25, the requested access.

If the answer is no, i.e. when the displayed random number modified does not correspond with the expected data stored within the token 12 or into the device 14, then the requested access is rejected. In an embodiment, the steps 23 to 26 are repeated, i.e. the token 12 requests once again to the user to be authenticated by giving a further attempt for PIN code

In a variant embodiment, at step 22 the token 12 generates a random number which is displayed onto the electronic display 13 of the token 12. The size of the random number is greater than the size of a PIN code.

In an embodiment the random number is a string of 10 different digits (see FIG. 2). In a variant, the random number is more 10 different digits.

At step 23, the terminal 11 displays a message for entering the Pin code. For instance, the graphical user interface displays the following message "Please select your PIN code".

The user provides the requested PIN code by entering information through the graphical user interface and/or the input means of the terminal. Said input means allow to the user:
a) - to move forward to the digits of the random number, for example, by highlighting them successively digit by digit,
b) - to select the digit highlighted and wished by the user, for example, by clicking on a selecting area displayed on the terminal 11 or on the key of the keyboard,
c) - to validate the selected digits as PIN code, for example, by clicking on a validating area displayed on the terminal 11 on the key of the keyboard.

Various embodiments can be used to move forward the digits of the random number, to select one digit highlighted and to validate selected digits as PIN. In an embodiment, a digital rowel is displayed on the graphical user interface. The user thanks, for example, to the mouse or the keyboard moves the digital rowel to move forward to the digits of the random number. The digital rowel movement is sent to the token 12, the firmware highlights successively the digits of the random number according to the direction of the movement of the digital rowel. For example, it can be pre-established that the movements in the right direction highlight the random number digit by digit in the right direction.

In another embodiment, as illustrated in FIG. 2, a button right and left are displayed on the graphical user interface. By clicking on these buttons the user is able to move forward to the digits of the random number.

During step 24 of the test, the token 12 analyses whether the validated highlighted digits are the expected data. If the answer is yes, i.e. when the validated highlighted digits corresponds with the expected data stored within the token 12 or the device 14, then the token 12 authorizes, at step 25, the requested access. If the answer is no, then the requested access is rejected.

With the invention, the token 12 does not required an input device, such as the current PIN pad, but relies on terminal input device allowing providing a low cost security of the entering of the PIN.

## Claims

1. Method to secure entering a PIN code that are made on a terminal not trusted to be secure wherein,
- generating a random number which is displayed onto an electronic display of a token connected to the terminal,
- entering the PIN code by manipulating the digits of the random number thanks to a graphical user interface and/or user input means of the terminal to select and validate a PIN code from a random number,
- verifying if the entered PIN code is the expected one.

2. Method according to the previous claim, wherein the random number generated having the size of the PIN code is modified by entering information through the graphical user interface and/or user input means of the terminal, during said modification step for each signal from the terminal, the token interprets it and increases or decreases the random number according to pre-defined rules associated to said signal.

3. Method according to the previous claim, wherein during the modification step a digital rowel displayed on the graphical user interface is moved thanks to user input means, the digital rowel movements sent to the token allow to increase or decrease the random number digit by digit, a couple of digits by a couple digits or a whole digits according to the pre-defined rules associated to said direction of the movement of the digital rowel.

4. Method according to the claim 2, wherein during the modification step, some command of the input means are specified to increase or decrease the random number digit by digit, a couple of digits by a couple of digits or a whole digits according to the pre-defined rules associated to said specifics command.

5. Method according to claim 1, wherein the random number generated having the size greater than the size of a PIN code is selected digit by digit by entering information through the graphical user interface and/or user input means of the terminal, during this selection step for each signal from the terminal the token interprets it and highlights successively digit by digit the random number according to pre-defined rules associated to said signal.

6. Method according to the previous claim, during the selection step, the graphical user interface and/or user input means allows:
- to move forward to the digits of the random number by highlighting them successively digit by digit,
- to select the digit highlighted and wished by the user, and
- to validate the selected digits as PIN code.

7. Method according to the claims 5 to 6, wherein the random number is a string of 10 or more different digits

8. Method according to the claims 2 to 7, wherein the input means are a keyboard, a virtual keyboard, a mouse or a voice-recognition input command.

9. Method according to any previous claims, wherein a software downloaded into the terminal and a firmware of the token allow to correlate the manipulation onto the graphical user interface and/or input means to the modification to be made onto the digits displayed on the electronic display of the token.

10. Security system comprising a non trusted terminal connected to a token comprising an electronic display **characterized in that** it comprises means to secure the entering of a PIN code according to any previous claims.

11. Security system according to the previous claim, wherein the token comprises a reader of a device embedding a smart card.

12. Security system according to any previous claims, wherein the terminal is a personal computer, a mobile phone, a PDA, a tablet computer, a Laptop or a notebook.

13. Security system according to any previous claims, wherein the token is a key fob, a card, a card reader, a USB-connected device, a contactless device or a multifunctional tool which is provided through proprietary software installed on an electronic device.
